# EUROPEAN PATENT SPECIFICATION

(11) **EP 4 149 116 B1**
(45) Date of publication and mention of the grant of the patent: **20.08.2025**
(21) Application number: 21817903.4
(22) Date of filing: 04.06.2021
(51) Int. Cl.: H04N 21/422, G06F 3/01, G06F 3/0485, G06V 10/82, G06V 40/20, H04N 21/4223

(54) **CONTROL METHOD AND DEVICE, TERMINAL AND STORAGE MEDIUM**
STEUERUNGSVERFAHREN UND -VORRICHTUNG, ENDGERÄT UND SPEICHERMEDIUM
PROCÉDÉ ET DISPOSITIF DE COMMANDE, TERMINAL ET SUPPORT D'ENREGISTREMENT

(30) Priority: 05.06.2020 CN 202010507222
(43) Date of publication of application: 15.03.2023
(73) Proprietor: BEIJING BYTEDANCE NETWORK TECHNOLOGY CO., LTD., Beijing 100041 (CN)
(72) Inventor: FANG, Chi, Beijing 100190 (CN); WANG, Xiao, Beijing 100190 (CN)
(74) Representative: Marks & Clerk LLP
(86) International application number: PCT/CN2021/098464
(87) International publication number: WO 2021/244650

(56) References cited:
- CN-A- 102 270 037
- CN-A- 102 981 742
- CN-A- 105 892 636
- CN-A- 109 696 958
- CN-A- 109 710 071
- CN-A- 111 601 129
- KR-A- 20140 139 726
- KR-A- 20140 139 726
- US-A1- 2015 338 651
- US-A1- 2018 011 543
- US-A1- 2019 073 112

## Description

### FIELD

The disclosure relates to a computer-implemented control method for controlling a visual element, and a control device for controlling a visual element.

### BACKGROUND

Smart TVs have replaced traditional TVs and can be equipped with a wide range of programmes and applications for users to choose from and watch. Smart TVs are controlled by a remote control, which usually has only four directional keys (up, down, left and right) to control the direction, making interaction inefficient and time-consuming.

KR 2014 0139726 A describes a system and method for executing a command according to a worker's gesture by recognizing the worker's gesture in an environment where the worker cannot directly touch and control equipment. US 2015/338651 A1 describes a method, comprising tracking the gaze of an eye of a user by a first camera, wherein a position of the gaze determines a place for the cursor on the screen of a near-to-eye display (NED), wherein the movement of the gaze is configured to move the cursor on the screen and when the movement of the gaze is detected to be still or moving only slightly; observing a gesture of one hand of the user by a second camera, and executing a further operation if at least one gesture of the hand is detected. US 2019/073112 A1 describes a technology for calculating spatial trajectories of different gestures and determining a dominant gesture based on magnitudes of the spatial trajectories. US 2018/0011543 A1 describes an information processing apparatus includes a memory storing a program and at least one processor that executes the program to implement processes of detecting a speed of motion of a user based on motion information relating to a motion of the user that is detected by a detection device, and generating position information of a position indication display information item, which is displayed on a display device and indicates a position designated by the user, based on the motion information relating to the motion of the user.

### SUMMARY

This summary part is provided to introduce concepts in a brief form, and these concepts will be further described in the following specific embodiments. The summary is intended to neither identify key features or essential features of the claimed technical solutions nor limit the scope of the claimed technical solutions.

The invention is set out in the appended set of claims.

### BRIEF DESCRIPTION OF THE DRAWINGS

The above and other features, advantages and aspects of embodiments of the disclosure will become more apparent in combination with the accompanying drawings and with reference to the following specific implementations. Throughout the accompanying drawings, the same or similar reference numerals represent the same or similar elements. It should be understood that the accompanying drawings are illustrative, and the originals and elements are not necessarily drawn to scale.
Fig. 1 illustrates a flow chart of a control method provided according to an embodiment of the disclosure.
Fig. 2 illustrates a schematic diagram of a scene of controlling a far-field display device according to a control method provided by an embodiment of the disclosure.
Fig. 3 illustrates a flow chart of a control method provided according to another embodiment of the disclosure.
Fig. 4 illustrates a schematic structural diagram of a control device provided according to one or more embodiments of the disclosure.
Fig. 5 is a schematic structural diagram of a terminal device for implementing an embodiment of the disclosure.

### DETAILED DESCRIPTION OF THE DISCLOSURE

The embodiments of the disclosure will be described in more detail below with reference to the accompanying drawings. Although some embodiments of the disclosure are shown in the accompanying drawings, it should be understood that the disclosure may be implemented in various forms and should not be construed as being limited to the embodiments described herein, on the contrary, these embodiments are provided for a more thorough and complete understanding of the disclosure.

It should be understood that the steps described in the embodiments of the disclosure may be performed according to different orders and/or in parallel. In addition, the embodiments may include additional steps and/or omit the execution of the shown steps.

In the following description, although numerous features may be designated as optional, it is nevertheless acknowledged that all features defined by the independent claims are not to be read as optional.

The term "comprising" used herein and variants thereof means open-ended including, i.e., "including, but not limited to". The term "based on" refers to "based at least in part on". The term "one embodiment" represents "at least one embodiment"; the term "the other embodiment" represents "at least one additional embodiment"; and the term "some embodiments" represents "at least some embodiments". Definitions of other terms will be provided in the description below.

It should be noted that the terms such as "first", "second" and the like mentioned in the disclosure are merely intended to distinguish different devices, modules or units, rather than limiting an order of functions executed by these devices, modules or units or an interdependence among these devices, modules or units.

It should be noted that the modifications of "a" and "multiple" mentioned in the disclosure are illustrative, but are not restrictive. It should be understood by those skilled in the art that it should be understood as "one or more" unless otherwise specified in the context.

Names of messages or information interacted among a plurality of devices in the embodiments of the disclosure are merely for an illustrative purpose, rather than limiting the scope of these messages or information.

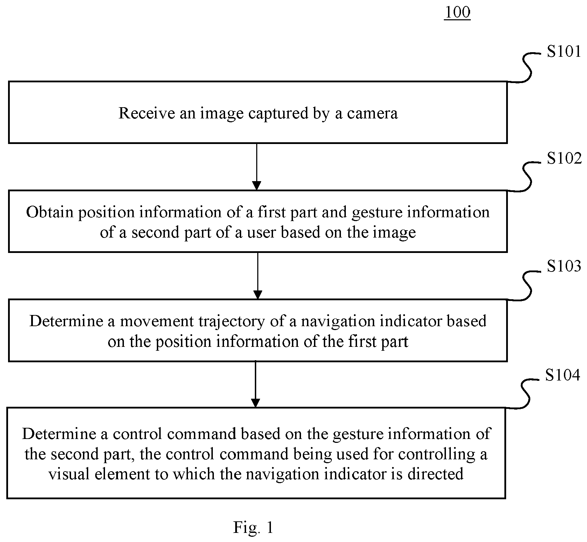

Referring to Fig. 1, which illustrates a flow chart of a control method 100 provided according to an embodiment of the disclosure, the method 100 may be used for a terminal device including but not limited to a far-field display device. The far-field display device refers to a display device that cannot be controlled by the user in a direct contact manner using body parts or other physical control devices such as a stylus, including but not limited to electronic devices such as TVs and conference screens. Specifically, the method 100 includes step S101 to step S104:
step S101, an image captured by a camera is received.

The camera may be built in or externally connected to the terminal device, which may send captured image data to the terminal device in real time for processing. Advantageously, the camera is set in a way that may face the user directly, so as to capture limb instructions sent by the user to the terminal device.

It needs to be noted that in other embodiments, images may further be received in other manners, or images captured or transmitted by other apparatuses are received, which is not limited in the disclosure.

Step S102, position information of a first part and gesture information of a second part of a user are obtained based on the image.

The first part and the second part are body parts of the user, such as one or more hands. The position information of the first part is used to describe the position of the first part in the image, or the position of the first part relative to the controlled terminal device, and gesture information of the second part is used to describe the gesture of the second part, such as a hand gesture, etc.

Exemplarily, the position information of the first part and the gesture information of the second part of the user in the image may be obtained.

Step S103, a movement trajectory of a navigation indicator is determined based on the position information of the first part.

The navigation indicator may be used for selecting and controlling a visual element on a display interface. The navigation indicator may be represented by an icon, such as a cursor, or pointer, for example. and the navigation indicator may also be hidden while the visual element is highlighted or otherwise animated to indicate that the visual element is selected. The movement trajectory of the navigation indicator includes one or a group of moving vectors, which reflect a moving displacement and direction of the navigation indicator. The movement trajectory of the navigation indicator is determined by the position information of the first part of the user.

Exemplarily, a controlled element to which the navigation indicator is directed may be determined based on the position information of the first part, for example, a position and/or a movement trajectory of the navigation indicator on a controlled device is determined based on the position information of the first part relative to the controlled device, and the controlled element to which the navigation indicator is directed is determined based on the position and/or the movement trajectory.

Step S104, a control command is determined based on the gesture information of the second part, and the control command is used for controlling a visual element to which the navigation indicator is directed.

The control command is used to control or perform operation on the visual element to which the navigation indicator is directed, including clicking, touching, long pressing, zooming in, zooming out and rotating the visual element. In some embodiments, a mapping relation between the gesture information of each second part and the control command may be preset, so that the control command corresponding to the gesture information of the second part may be determined based on the mapping relation.

In this way, according to the control method provided by the embodiment of the disclosure, the movement trajectory of the navigation indicator is determined based on the position information of the first part, and the control command is determined based on the gesture information of the second part, so that determination of the control command is independent of determination of the position of the navigation indicator. On the one hand, the determination of the control command is based on static gesture information, while the determination of the position of the navigation indicator is based on dynamic position changes, thus facilitating the use of different characteristic algorithms to determine the above two processes respectively. Exemplarily, the determination of the control command may be based on the static gesture information, while the determination of the position of the navigation indicator is based on the dynamic position change information. Therefore, for the above two different calculation characteristics, the position information of the first part and the gesture information of the second part may be calculated by adopting computing modules with corresponding characteristics respectively, thereby improving the targeting of the information acquisition, the accuracy of the calculation and the utilization of the calculation resources. On the other hand, the determination of the control command and the determination of the position of the navigation indicator are based on different body parts of the user, which can make the determination processes of the two not affect each other, especially the shape of the contour of the first part does not change with the gesture of the second part, which can avoid the change of the gesture affecting the movement of the navigation indicator, and thus can improve the recognition accuracy of the user command.

According to the invention, the first part and the second part belong to different body parts of the same user. There is no inclusive relationship between the first part and the second part, for example, when the second part is the hand, the first part can be the wrist, the elbow and not the fingers. In the embodiment of the disclosure, the movement trajectory of the navigation indicator and the control command are determined based on different body parts of the user respectively, so that the determination of the control command can be prevented from being affected when the user changes the position of the first part or the determination of the movement trajectory of the navigation indicator can be prevented from being affected when the user changes the gesture of the second part.

In some embodiments, the position of the second part can change with the position of the first part; and a position or gesture of the first part itself does not affect the gesture of the second part. In this way, the position of the second part can follow that of the first part, allowing the first and second parts to move in an interconnected space, avoiding the difficulty of capturing images of both the first and second parts due to the large spatial distance between them, which makes it difficult for the camera device to capture images of the first and second parts at the same time, thus increasing the success rate and ease of control of the controlled element using the first and second parts. In addition, changes in the position and/or gesture the first part do not affect the gesture of the second part, which also improves the accuracy of the control commands generated based on the attitude of the second part, allowing precise and easy control of the position of the navigation indicator and the issuing of control commands.

According to the invention, the first part comprises a wrist, and the second part comprises a hand. In the embodiment of the disclosure, the wrist reflects the movement of the gesture accurately and steadily, and is less affected by changes in the gesture than the fingers or palm of the hand, allowing precise control of the movement of the navigation indicator. The movement of the wrist has no effect on the gesture, so that control commands can be given easily and precisely.

In some embodiments, step S 102 further includes:
step A1, the position information of the first part of the user is obtained based on the image by means of a first computing module; and
step A2, the gesture information of the second part of the user is obtained based on the image by means of a second computing module.

The determination of the control command is based on the static gesture information, while the determination of the position of the navigation indicator is based on the dynamic position change. Therefore, in this embodiment, the position information of the first part and the gesture information of the second part are calculated by adopting the computing modules with different characteristics respectively, the pertinence of information acquisition can be improved, thus increasing the calculation accuracy and the utilization of calculation resources.

In some embodiments, the first computing module may run a first machine learning model, and the second computing module may run a second machine learning model. The first machine learning module and the second machine learning module are trained to reliably recognize and distinguish the first part and the second part of the user. By using a trained machine learning model to determine the position information of the first part and the gesture information of the second part, recognition accuracy can be improved and computational resources and hardware costs can be reduced.

In some embodiments, step S104 further includes:
step B 1, if the gesture information of the second part conforms to a preset first gesture, a controlled element is controlled based on the gesture information of the second part.

The first gesture may include one or more preset hand gestures.

In some embodiments, step S104 further includes:
step B2, if the gesture information of the second part does not conform to the preset first gesture, the controlled element is not controlled based on the gesture information of the second part.

In some embodiments, when the gesture information of the second part does not conform to the preset first gesture, the navigation indicator is moved only based on the position information of the first part.

In some embodiments, step S 102 further includes:
step C1, a key point of the first part in the image is determined; and
step C2, the position information of the first part is determined based on a position of the key point of the first part in the image.

In some embodiments, the method 100 further includes:
step S105, the visual element to which the navigation indicator is directed is controlled based on position information of the first part obtained based on at least two frames of target image. Exemplarily, the controlled element to which the navigation indicator is directed may be controlled based on the position change information of the first part obtained from the at least two frames of target image. The manner to control the controlled element to which the navigation indicator is directed includes, but not limited to controlling the controlled element to move on a controlled device by scrolling or moving, for example, scrolling or moving an application interface, an icon or other controls.

A method of determining the at least two frames of target image includes:
step D1, when the gesture information of the second part conforms to a preset second gesture, an image corresponding to the gesture information of the second part is taken as a target image; and
step D2, the at least two frames of target image are selected from a plurality of consecutive frames of target image.

According to one or more embodiments of the disclosure, the target image is an image whose gesture information conforms to the second gesture. According to the invention, by translating the change in position of the first part into a scrolling effect of the visual element when the gesture information conforms to the second gesture, the user can control the navigation indicator to scroll the visual element, thereby enhancing interaction efficiency. The second gesture may include one or more preset hand gestures. Exemplarily, the controlled element may be moved based on the position information of the first part and/or the preset gesture of the second part, so that the controlled element to which the navigation indicator is directed is determined.

In some embodiments, step S105 further includes:
step E1, motion information of the first part is determined based on the position information of the first part obtained based on the at least two frames of target image; and
step E2, the visual element is scrolled based on the motion information of the first part.

The motion information of the first part includes one or more of the following: motion time of the first part, a motion speed of the first part, a displacement of the first part and a motion acceleration of the first part. In this embodiment, the motion information is determined based on the position information, and initial parameters and conditions required for scrolling the visual element can be obtained, so that relevant scrolling parameters of the visual element are determined.

In some embodiments, step E2 further includes:
whether the motion information of the first part meets a preset motion condition is determined; and
if yes, a scrolling direction and a scrolling distance of the visual element are determined based on the motion information of the first part.

In some embodiments, the second gesture is that a preset number of fingers splay out. Exemplarily, the second gesture comprises splaying five fingers of one hand apart. The scrolling commands usually require fast movement of the gesture, and with fast movement, splaying a preset number of fingers apart is easier to recognize than other gestures, thus improving recognition accuracy.

In some embodiments, step S103 further includes: if the gesture information of the second part conforms to a preset third gesture, the movement trajectory of the navigation indicator is determined based on the position information of the first part. The third gesture may include a plurality of preset hand gestures. In this embodiment, if the gesture information of the second part conforms to the preset third gesture, the movement trajectory of the navigation indicator is determined based on the position information of first part. For example, the navigation indicator is moved only based on the position of the first part when the hand conforming to the preset hand gesture, which prevent the user from unintentionally moving the first part to cause the navigation indicator to move by mistake.

In some embodiment, step S103 further includes: the movement trajectory of the navigation indicator is determined based on the position information of the first part obtained from spaced images. In the embodiment of the disclosure, in order to prevent jitter of the navigation indicator caused by the inevitable shaking of the user when waving the first part, the movement trajectory of the navigation indicator can be determined based on the position information of the first part obtained from the spaced images, which can reduce jitter of the navigation indicator compared to determining the movement trajectory of the navigation indicator based on the position change of the first part determined from the continuous images. The number of frames between the two spaced images may be predetermined or dynamically adjusted. Exemplarily, the change in position of the first part in a plurality of frames in chronological order (e.g., a plurality of consecutive frames), or the coordinates of the navigation indicator transformed by the change in position, can be fitted to a smooth curve from which the trajectory of the navigation indicator can be determined.

In some embodiments, the camera is an RGB camera. The method 100 further includes a color space preprocessing step, which performs HSV color space processing on image data, so as to convert a color space of the image data into an HSV color space. The RGB camera usually uses three independent CCD sensors to obtain three color signals, which can capture very accurate color images and the accuracy of extraction and recognition of gesture features of the second part and the key point features of the first part can be improved. However, since RGB mode images are not conducive to skin color segmentation, according to the embodiment of the disclosure, color space preprocessing is further performed on the image data captured by the camera, the color space of the image data is converted into the HSV color space, so that the subsequent recognition and extraction of the gesture features of the second part and the key point features of the first part can be more accurate.

In some embodiments, the first machine learning model comprises a convolutional neural networks (CNN) model. The method 100 further includes a step of binarization preprocessing which preforms binarization processing on the image data to obtain binarization image data and a step of white balance preprocessing which performs white balance processing on the image data. Convolutional neural networks are input-to-output mappings that learn mapping relationships between inputs and outputs without the need for any precise mathematical expressions between inputs and outputs, and can be trained by known patterns to have the ability to map between input-output pairs, which are used to recognize the displacement of two-dimensional shapes with high accuracy. Therefore, adopting the convolutional neural network model to obtain the position of the first part has high accuracy. Further, the binarization of the image makes it possible to significantly reduce the amount of data of the image data to highlight the gesture contour of the second part, while the white balance processing corrects the lighting conditions of the image data so that the subsequent identification and extraction of the gesture features of the second part and the key point features of the first part can be more accurate.

In some embodiments, step S103 further includes: a final movement trajectory of the navigation indicator is determined by adopting a filtering algorithm and an anti-shake algorithm based on the position information of the first part. The filtering algorithm may include a Kalman filtering algorithm, and the anti-shake algorithm may include a moving average algorithm. In the embodiment of the disclosure, the position change of the key point features of the first part or the navigation indicator coordinate change determined by the position change is processed by adopting the filtering algorithm and the anti-shake algorithm, so that the movement trajectory of the navigation indicator can be smoother, and jitter of the navigation indicator is prevented.

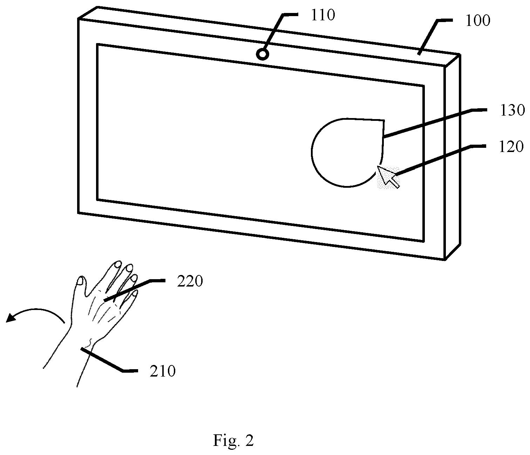

Fig. 2 illustrates a schematic diagram of a scene of controlling a far-field display device based on a control method provided by an embodiment of the disclosure. The far-field display device 100 has a camera 110 which is configured to capture an image within a certain region in front of the far-field display device 100. According to the control method provided by one or more embodiments of the disclosure, a user (not shown) may wave wrist 210 to move a navigation indicator 120 displayed on the far field display device 100, and performs a gesture with hand 220 to give a specific control command to a visual element 130 to which the navigation indicator 120 is directed.

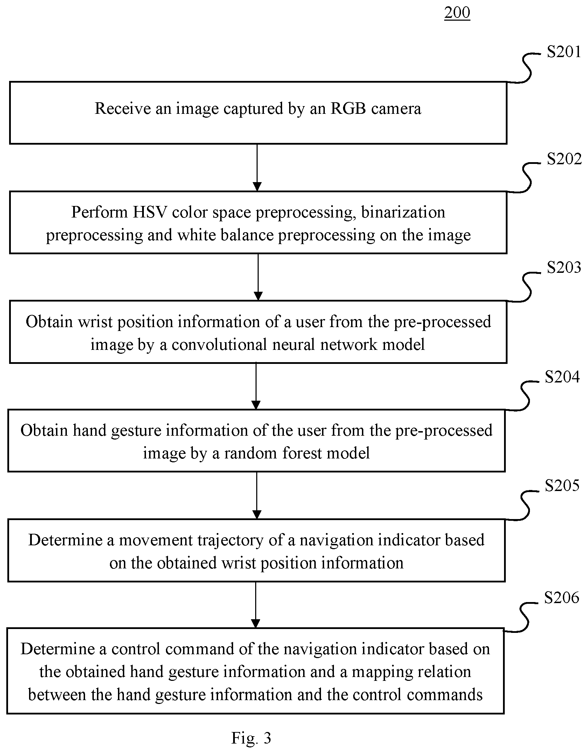

Referring to Fig. 3, which illustrates a flow chart of a control method 200 provided based on another embodiment of the disclosure, and the method 200 includes step S201 to step S206:
step S201, an image captured by an RGB camera is received;
step S202, HSV color space preprocessing, binarization preprocessing and white balance preprocessing are performed on the image;
step S203, wrist position information of a user is obtained from the pre-processed image by a convolutional neural network model;
step S204, hand gesture information of the user is obtained from the pre-processed image by a random forest model. Random forest is a machine learning algorithm that is very tolerant of noise and outliers, does not overfit, and is highly accurate in extracting and identifying a wide range of second part gesture features;
step S205, a movement trajectory of a navigation indicator is determined based on the obtained wrist position information; and
step S206, a control command of the navigation indicator is determined based on the obtained hand gesture information and a mapping relation between the hand gesture information and the control commands. The control command is used for controlling a visual element to which the navigation indicator is directed.

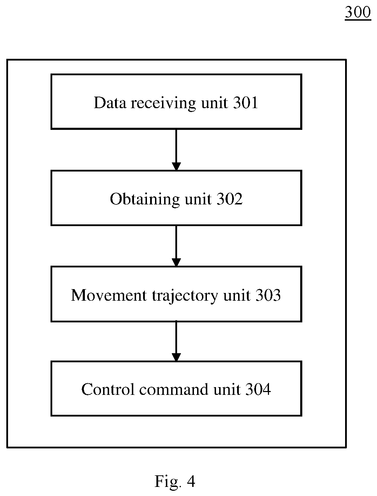

Accordingly, Figure 4 illustrates a schematic diagram of the structure of a control method device 300 provided in accordance with an embodiment of the disclosure. The device 300 comprises:
a data receiving unit 301, configured to receive an image;
an obtaining unit 302, configured to obtain position information of a first part and gesture information of a second part of a user based on the image;
a movement trajectory unit 303, configured to determine a movement trajectory of a navigation indicator based on the position information of the first part; and
a control command unit 304, configured to determine a control command based on the gesture information of the second part, the control command being used for controlling a visual element to which the navigation indicator is directed.

According to the control method device provided by one or more embodiments of the disclosure, the movement trajectory of the navigation indicator is determined based on the position information of the first part, and the control command is determined based on the gesture information of the second part, so that determination of the control command is independent of determination of the position of the navigation indicator. On the one hand, the determination of the control command is based on static gesture information, while the determination of the position of the navigation indicator is based on dynamic position changes, thus facilitating the use of different characteristic algorithms to determine the above two processes respectively. Exemplarily, the determination of the control command may be based on the static gesture information, while the determination of the position of the navigation indicator is based on the dynamic position change information. Therefore, for the above two different calculation characteristics, the position information of the first part and the gesture information of the second part may be calculated by adopting computing modules with corresponding characteristics respectively, thereby improving the targeting of the information acquisition, the accuracy of the calculation and the utilization of the calculation resources. On the other hand, the determination of the control command and the determination of the position of the navigation indicator are based on different body parts of the user, so that these determination processes do not interfere with each other, especially the shape of the contour of the first part does not change with the gesture of the second part, which can avoid the change of the gesture affecting the movement of the navigation indicator, and thus can improve the recognition accuracy of the user command.

It needs to be noted that in other embodiments, images may further be received in other manners, or images captured or transmitted by other apparatuses are received, which is not limited in the disclosure.

For the embodiment of the device, which basically corresponds to the method embodiment, it is sufficient to refer to the description of the method embodiment for the relevant parts. The embodiments of the device described above are merely schematic, where the modules illustrated as separate modules may or may not be separate. Some or all of these modules may be selected according to practical needs to achieve the purpose of this embodiment solution. It can be understood and implemented without creative work by a person of ordinary skill in the art.

In some embodiments, the obtaining unit 302 is further configured to obtain the position information of the first part of the user based on the image by means of a first computing module and obtain the gesture information of the second part of the user based on the image by means of a second computing module.

The determination of the control command is based on the static gesture information, while the determination of the position of the navigation indicator is based on the dynamic position change. Therefore, in this embodiment, the position information of the first part and the gesture information of the second part are calculated by adopting the computing modules with different characteristics respectively, the pertinence of information acquisition can be improved, thus increasing the calculation accuracy and the utilization of calculation resources.

In some embodiments, the first computing module may run a first machine learning model, and the second computing module may run a second machine learning model. The first machine learning module and the second machine learning module are trained to reliably recognize and distinguish the first part and the second part of the user. By using a trained machine learning model to determine the position information of the first part and the gesture information of the second part, recognition accuracy can be improved and computational resources and hardware costs can be reduced.

In some embodiments, the control command unit 304 is further configured to control a controlled element based on the gesture information of the second part if the gesture information of the second part conforms to a preset first gesture.

The first gesture may include one or more preset hand gestures.

In some embodiments, the control command unit 304 is further configured to not control the controlled element based on the gesture information of the second part if the gesture information of the second part does not conform to the preset first gesture

In some embodiments, when the gesture information of the second part does not conform to the preset first gesture, the navigation indicator is moved only based on the position information of the first part.

In some embodiments, the obtaining unit 302 further comprises:
key point determination sub-unit, configured to determine a key point of the first part in the image; and
position determination sub-unit, configured to determine the position information of the first part based on a position of the key point of the first part in the image.

In some embodiments, the device 300 further includes scrolling unit, configured to scroll the visual element to which the navigation indicator is directed based on position information of the first part obtained based on at least two frames of target image.

In some embodiments, the scrolling unit further includes:
target image determination sub-unit, configured to take, if the gesture information of the second part conforms to a preset second gesture, an image corresponding to the gesture information of the second part as a target image; and
target image selection sub-unit, configured to select the at least two frames of target image from a plurality of consecutive frames of target image.

According to one or more embodiments of the disclosure, the target image is an image whose gesture information conforms to the second gesture. According to the invention, by translating the change in position of the first part into a scrolling effect of the visual element when the gesture information conforms to the second gesture, the user can control the navigation indicator to scroll the visual element, thereby enhancing interaction efficiency. The second gesture may include one or more preset hand gestures.

In some embodiments, the scrolling unit further includes:
motion information sub-unit, configured to determine motion information of the first part based on the position information of the first part obtained based on the at least two frames of target image; and
scrolling sub-unit, configured to scroll the visual element based on the motion information of the first part.

The motion information of the first part includes one or more of the following: motion time of the first part, a motion speed of the first part, a displacement of the first part and a motion acceleration of the first part. In this embodiment, the motion information is determined based on the position information, and initial parameters and conditions required for scrolling the visual element can be obtained, so that relevant scrolling parameters of the visual element are determined.

In some embodiments, the scrolling sub-unit is further configured to determine whether the motion information of the first part meets a preset motion condition, and if yes, to determine a scrolling direction and a scrolling distance of the visual element based on the motion information of the first part

In some embodiments, the second gesture comprises splaying five fingers of one hand apart. The scrolling commands usually require fast movement of the gesture, and with fast movement, splaying five fingers apart is easier to recognize than other gestures, thus improving recognition accuracy.

In some embodiments, the movement trajectory unit 303 is further configured to determine the movement trajectory of the navigation indicator based on the position information of the first part, if the gesture information of the second part conforms to a preset third gesture, The third gesture may include a plurality of preset hand gestures. In this embodiment, if the gesture information of the second part conforms to the preset third gesture, the movement trajectory of the navigation indicator is determined based on the position information of first part. For example, the navigation indicator is moved only based on the position of the first part when the hand conforming to the preset hand gesture, which prevent the user from unintentionally moving the first part to cause the navigation indicator to move by mistake.

In some embodiments, the movement trajectory unit 303 is further configured to determine the movement trajectory of the navigation indicator based on the position information of the first part obtained from spaced images. In order to prevent jitter of the navigation indicator caused by the inevitable shaking of the user when waving the first part, the movement trajectory of the navigation indicator can be determined based on the position information of the first part obtained from the spaced images, which can reduce jitter of the navigation indicator compared to determining the movement trajectory of the navigation indicator based on the position change of the first part determined from the continuous images. Exemplarily, the change in position of the first part in a plurality of frames in chronological order (e.g., a plurality of consecutive frames), or the coordinates of the navigation indicator transformed by the change in position, can be fitted to a smooth curve from which the trajectory of the navigation indicator can be determined.

In some embodiments, the camera is an RGB camera. The device 300 further includes a color space preprocessing unit configured to perform HSV color space processing on image data, so as to convert a color space of the image data into an HSV color space. The RGB camera usually uses three independent CCD sensors to obtain three color signals, which can capture very accurate color images and the accuracy of extraction and recognition of gesture features of the second part and the key point features of the first part can be improved. However, since RGB mode images are not conducive to skin color segmentation, according to the embodiment of the disclosure, color space preprocessing is further performed on the image data captured by the camera, the color space of the image data is converted into the HSV color space, so that the subsequent recognition and extraction of the gesture features of the second part and the key point features of the first part can be more accurate.

In some embodiments, the first machine learning model comprises a convolutional neural networks (CNN) model. The device 300 further includes a binarization and white balance preprocessing unit configured to preform binarization processing and white balance processing on the image data. Convolutional neural networks are input-to-output mappings that learn mapping relationships between inputs and outputs without the need for any precise mathematical expressions between inputs and outputs, and can be trained by known patterns to have the ability to map between input-output pairs, which are used to recognize the displacement of two-dimensional shapes with high accuracy. Therefore, adopting the convolutional neural network model to obtain the position of the first part has high accuracy. Further, the binarization of the image makes it possible to significantly reduce the amount of data of the image data to highlight the gesture contour of the second part, while the white balance processing corrects the lighting conditions of the image data so that the subsequent identification and extraction of the gesture features of the second part and the key point features of the first part can be more accurate.

In some embodiments, the movement trajectory unit 303 is further configured to determine a final movement trajectory of the navigation indicator by adopting a filtering algorithm and an anti-shake algorithm based on the position information of the first part. The filtering algorithm may include a Kalman filtering algorithm, and the anti-shake algorithm may include a moving average algorithm. In the embodiment of the disclosure, the position change of the key point features of the first part or the navigation indicator coordinate change determined by the position change is processed by adopting the filtering algorithm and the anti-shake algorithm, so that the movement trajectory of the navigation indicator can be smoother, and the jitter of the navigation indicator is prevented.

Correspondingly, the disclosure further provides a terminal that is not covered by the appended claims comprising:
at least one processor;
and at least one memory communicatively coupled to the at least one processor and storing instructions that upon execution by the at least one processor cause the terminal to perform the foregoing control method.

Correspondingly, the disclosure further provides a non-transitory computer storage medium storing computer-readable instructions to perform the foregoing control method when the computer-readable instructions are executed by a computing device.

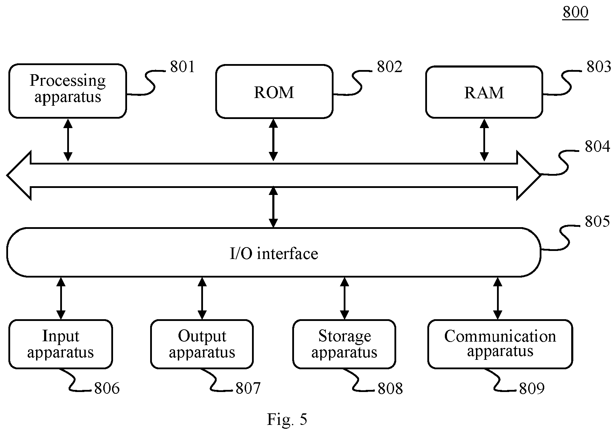

Referring now to Fig. 5, a structural schematic diagram of terminal equipment 900 suitable for implementing an embodiment of the disclosure is shown. The terminal equipment in the embodiment of the present disclosure can include, but is not limited to, mobile terminals such as a mobile phone, a notebook computer, a digital broadcast receiver, a personal digital assistant (PDA), a Pad, a portable media player (PMP) and a vehicle-mounted terminal (e.g., vehicle-mounted navigation terminal), and fixed terminals such as a digital TV and a desktop computer. The terminal equipment shown in Fig. 5 is only an example, and should not bring any restrictions on the functions and application scope of the embodiments of the present disclosure.

As shown in Fig. 5, the terminal equipment 900 can comprise a processing device (e.g., central processing unit, graphics processor, etc.) 901, which can perform various appropriate actions and processing according to a program stored in a read-only memory (ROM) 902 or a program loaded into a random access memory (RAM) 903 from a storage device 908. In the RAM 903, various programs and data required for the operation of the terminal equipment 900 are also stored. The processing device 901, the ROM 902, and the RAM 903 are connected through a bus 904. An Input/Output (I/O) interface 905 is also connected to the bus 904.

Generally, the following devices can be connected to the I/O interface 905: an input device 906 such as a touch screen, a touch pad, a keyboard, a mouse, a camera, a microphone, an accelerometer and a gyroscope; an output device 907 such as a liquid crystal display (LCD), a speaker and a vibrator; a storage device 908 such as a magnetic tape and a hard disk; and a communication device 909. The communication device 909 can allow the terminal equipment 900 to perform wireless or wired communication with other equipment to exchange data. Although Fig. 5 shows the terminal equipment 900 with various devices, it should be understood that it is not required to implement or provide all the devices shown. More or fewer devices may alternatively be implemented or provided.

Particularly, according to the invention, the processes described above with reference to the flowcharts is implemented as computer software programs. For example, the embodiments of the disclosure comprise a computer program product comprising a computer program carried by a computer-readable medium, and the computer program contains program codes for executing the method shown in the flowcharts. In such embodiment, the computer program can be downloaded and installed from a network through the communication device 909, or installed from the storage device 908, or installed from the ROM 902. When the computer program is executed by the processing device 901, the above functions defined in the method of the embodiments of the disclosure are executed.

It should be noted that the above-mentioned computer-readable medium can be a computer-readable signal medium or a computer-readable storage medium or any combination of the two. The computer-readable storage medium may be, for example, but not limited to, an electrical, magnetic, optical, electromagnetic, infrared or semiconductor system, device or component, or any combination of the above. More specific examples of the computer-readable storage medium may include, but are not limited to, an electrical connector with one or more wires, a portable computer disk, a hard disk, an RAM, an ROM, an electrically erasable programmable read only memory (EPROM) or flash memory, an optical fiber, a portable compact disc read-only memory (CD-ROM), an optical storage device, a magnetic storage device, or any suitable combination of the above. In the disclosure, the computer-readable storage medium can be any tangible medium containing or storing a program, which can be used by or in combination with an instruction execution system, device or component. In the disclosure, the computer-readable signal medium can comprise a data signal propagated in a baseband or as part of a carrier wave, in which computer-readable program codes are carried. This propagated data signal can take various forms, including but not limited to an electromagnetic signal, an optical signal or any suitable combination of the above. The computer-readable signal medium can also be any computer-readable medium other than the computer-readable storage medium, and the computer-readable signal medium can send, propagate or transmit the program for use by or in connection with the instruction execution system, device or component. The program codes contained in the computer-readable medium can be transmitted by any suitable medium, including but not limited to electric wire, optical cable, radio frequency (RF) or any suitable combination of the above.

In some embodiments, the client and the server can use any currently known or future developed network protocols such as HTTP (Hyper Text Transfer Protocol) to communicate, and can communicate with any form or medium digital data communications (e.g., communications networks) interconnected. Examples of communication networks include local area networks ("LAN"), wide area networks ("WAN"), the Internet, and peer-to-peer networks (e.g., ad hoc peer-to-peer networks), as well as any currently known or future developed network.

The computer-readable medium can be included in the terminal equipment, and can also exist alone without being assembled into the terminal equipment.

The computer-readable medium stores one or more programs that upon execution by the terminal cause the terminal to: receive an image, obtain position information of a first part and gesture information of a second part of a user based on the image, determine a movement trajectory of a navigation indicator based on the position information of the first part, and determine a control command based on the gesture information of the second part, the control command being used for controlling a visual element to which the navigation indicator is directed.

Or, the computer-readable medium stores one or more programs that upon execution by the terminal cause the terminal to : receiving an image, obtaining position information of a first part and gesture information of a second part of a user based on the image, determining a controlled element to which a navigation indicator is directed based on the position information of the first part, and determine a control command based on gesture information of the second part, the control command being used for controlling the controlled element to which the navigation indicator is directed.

Computer program codes for performing the operations of the disclosure can be written in one or more programming languages or a combination thereof, including object-oriented programming languages such as Java, Smalltalk, C++, and conventional procedural programming languages such as "C" language or similar programming languages. The program code can be completely or partially executed on a user computer, executed as an independent software package, partially executed on a user computer and partially executed on a remote computer, or completely executed on a remote computer or server. In a case involving a remote computer, the remote computer can be connected to a user computer through any kind of network including a local area network (LAN) or a wide area network (WAN), or can be connected to an external computer (e.g., connected through the Internet using an Internet service provider).

The flowcharts and block diagrams in the drawings show the architectures, functions and operations of possible implementations of systems, methods and computer program products according to various embodiments of the disclosure. In this regard, each block in the flowchart or block diagram can represent a module, a program segment or part of a code that contains one or more executable instructions for implementing a specified logical function. It should also be noted that in some alternative implementations, the functions noted in the blocks can also occur in a different order from those noted in the drawings. For example, two consecutive blocks can actually be executed in substantially parallel, and sometimes they can be executed in reverse order, depending on the functions involved. It should also be noted that each block in the block diagrams and/or flowcharts, and combinations of blocks in the block diagrams and/or flowcharts, can be implemented with dedicated hardware-based systems that perform specified functions or actions, or can be implemented with combinations of dedicated hardware and computer instructions.

The modules or units described in the embodiments of the disclosure can be implemented by software or hardware. The name of a module or unit does not constitute a limitation to the module or unit itself under certain circumstances. For example, the obtaining unit can also be described as "a unit for obtaining position information of a first part and gesture information of a second part of a user based on the image".

The functions described herein above may be performed, at least in part, by one or more hardware logic components. For example, exemplary types of hardware logic components that may be used include: Field Programmable Gate Arrays (FPGAs), Application Specific Integrated Circuits (ASICs), Application Specific Standard Products (ASSPs), Systems on Chips (SOCs), Complex Programmable Logical Devices (CPLDs) and etc.

In the context of the present disclosure, a machine-readable medium may be a tangible medium that may contain or store programs for use by or in combination with an instruction execution system, device, or device. The machine-readable medium may be a machine-readable signal medium or a machine-readable storage medium. Machine readable media may include, but are not limited to, electronic, magnetic, optical, electromagnetic, infrared, or semiconductor systems, devices or devices, or any suitable combination of the above. More specific examples of machine-readable storage media will include electrical connections based on one or more lines, portable computer disks, hard disks, random access memory (RAM), read only memory (ROM), erasable programmable read only memory (EPROM or flash memory), optical fibers, portable compact disk read only memory (CD-ROM), optical storage devices, magnetic storage devices or any suitable combination of the above.

## Claims

1. A computer-implemented control method (100) for controlling a visual element (130), the method comprising:
receiving (S101) an image from a camera;
obtaining (S102) position information of a first part of a user and gesture information of a second part of a user based on the image;
determining (S103) a movement trajectory of a navigation indicator (120) based on the position information of the first part; and
determining (S104) a control command for controlling the visual element to which the navigation indicator is directed based on the gesture information of the second part;
wherein the first part comprises a wrist of an arm of the user and the second part comprises a hand of the arm of the user, the first part belonging to a different body part from the second part;
**characterized in that** the method further comprises, when the gesture information of the second part conforms to a predetermined gesture, translating a change of position of the first part into a scrolling effect of the visual element.

2. The control method of claim 1, wherein a change in the position of the first part reflects a change in the position of the second part.

3. The control method of claim 1, wherein a gesture of the second part is independent of a position and/or gesture of the first part.

4. The control method of claim 1, wherein the obtaining position information of a first part and gesture information of a second part of a user based on the image, comprises:
obtaining, by a first computing module, the position information of the first part of the user based on the image; and
obtaining, by a second computing module, the gesture information of the second part of the user based on the image, and
wherein the first computing module is configured to run a first machine learning model, and wherein the second computing module is configured to run a second machine learning model.

5. The control method of claim 1, wherein the visual element is controlled based on the gesture information of the second part if the gesture information of the second part conforms to a preset first gesture, or wherein the visual element is not controlled based on the gesture information of the second part if the gesture information of the second part does not conform to the preset first gesture.

6. The control method of claim 1, further comprising:
controlling the visual element to which the navigation indicator is directed based on the position information of the first part obtained based on at least two frames of target image,
wherein a method of determining the at least two frames of target image comprises:
taking, if the gesture information of the second part conforms to a preset second gesture, an image corresponding to the gesture information of the second part as the target image; and
selecting the at least two frames of target image from a plurality of consecutive frames of target image.

7. The control method of claim 6, wherein the controlling the visual element to which the navigation indicator is directed based on the position information of the first part obtained based on at least two frames of target image, comprises: determining motion information of the first part based on the position information of the first part obtained based on the at least two frames of target image; and controlling the visual element based on the motion information of the first part, or wherein the second gesture comprises splaying a preset number of fingers apart.

8. The control method of claim 7, wherein the motion information of the first part comprises one or more of the following: motion time of the first part, a motion speed of the first part, a displacement of the first part and a motion acceleration of the first part, or
wherein the controlling the visual element based on the motion information of the first part, comprises: determining whether the motion information of the first part meets a preset motion condition; and determining a scrolling direction and a scrolling distance of the visual element based on the motion information of the first part if the motion information of the first part meets a preset motion condition.

9. The control method of claim 1, wherein the determining a movement trajectory of a navigation indicator based on the position information of the first part, comprises: determining the movement trajectory of the navigation indicator based on the position information of the first part if the gesture information of the second part conforms to a preset third gesture, or
wherein the determining a movement trajectory of a navigation indicator based on the position information of the first part, comprises: determining the movement trajectory of the navigation indicator based on the position information of the first part obtained from spaced images.

10. The control method of claim 1, wherein
the receiving an image comprises: receiving (S201) an image captured by a camera (110), and the camera comprises an RGB camera, and wherein the control method further comprises: performing (S202) hue saturation value "HSV" color space processing on the image to convert a color space of the image into an HSV color space, or
the control method further comprises: preforming binarization processing and white balance processing on the image, or
the determining a movement trajectory of a navigation indicator based on the position information of the first part, comprises: determining, based on the position information of the first part, a final movement trajectory of the navigation indicator by adopting a filtering algorithm and an anti-shake algorithm.

11. The control method of claim 1, wherein the obtaining position information of a first part and gesture information of a second part of a user based on the image, comprises: obtaining the position information of the first part and the gesture information of the second part of the user in the image; or wherein the determining a movement trajectory of a navigation indicator based on the position information of the first part, comprises: determining a movement trajectory of a navigation indicator on a controlled device based on position information of the first part relative to the controlled device, and wherein the control command is for controlling a visual element to which the navigation indicator is directed on the controlled device.

12. A control device (300) for controlling a visual element (130), the device comprising:
a data receiving unit (301), configured to receive an image from a camera;
an obtaining unit (302), configured to obtain position information of a first part and gesture information of a second part of a user based on the image;
a movement trajectory unit (303), configured to determine a movement trajectory of a navigation indicator (120) based on the position information of the first part; and
a control command unit (304), configured to determine a control command for controlling a visual element to which the navigation indicator is directed based on the gesture information of the second part;
wherein the first part comprises a wrist of an arm of the user and the second part comprises a hand of the arm of the user, the first part belonging to a different body part from the second part;
**characterized in that** the device further comprises a scrolling unit configured to translate a change of position of the first part into a scrolling effect of the visual element when the gesture information of the second part conforms to a predetermined gesture.

## Patentansprüche

1. Computerimplementiertes Steuerungsverfahren (100) zum Steuern eines visuellen Elements (130), wobei das Verfahren Folgendes umfasst:
Empfangen (S101) eines Bilds von einer Kamera;
Erhalten (S102) von Positionsinformationen eines ersten Teils eines Benutzers und Gesteninformationen eines zweiten Teils eines Benutzers, basierend auf dem Bild;
Bestimmen (S103) einer Bewegungstrajektorie eines Navigationsindikators (120) basierend auf den Positionsinformationen des ersten Teils; und
Bestimmen (S104) eines Steuerbefehls zum Steuern des visuellen Elements, auf das der Navigationsindikator gerichtet ist, basierend auf den Gesteninformationen des zweiten Teils;
wobei der erste Teil ein Handgelenk eines Arms des Benutzers umfasst und der zweite Teil eine Hand des Arms des Benutzers umfasst, wobei der erste Teil zu einem anderen Körperteil gehört als der zweite Teil;
**dadurch gekennzeichnet, dass** das Verfahren weiter umfasst, eine Positionsänderung des ersten Teils in einen Bildlaufeffekt des visuellen Elements umzusetzen, wenn die Gesteninformationen des zweiten Teils einer vorgegebenen Geste entsprechen.

2. Steuerungsverfahren nach Anspruch 1, wobei eine Änderung der Position des ersten Teils eine Änderung der Position des zweiten Teils widerspiegelt.

3. Steuerungsverfahren nach Anspruch 1, wobei eine Geste des zweiten Teils unabhängig von einer Position und/oder Geste des ersten Teils ist.

4. Steuerungsverfahren nach Anspruch 1, wobei das Erhalten von Positionsinformationen eines ersten Teils und Gesteninformationen eines zweiten Teils eines Benutzers basierend auf dem Bild, Folgendes umfasst:
Erhalten, durch ein erstes Rechenmodul, der Positionsinformationen des ersten Teils des Benutzers basierend auf dem Bild; und
Erhalten, durch ein zweites Rechenmodul, der Gesteninformationen des zweiten Teils des Benutzers basierend auf dem Bild, und
wobei das erste Rechenmodul dazu konfiguriert ist, ein erstes maschinelles Lernmodell auszuführen, und wobei das zweite Rechenmodul dazu konfiguriert ist, ein zweites maschinelles Lernmodell auszuführen.

5. Steuerungsverfahren nach Anspruch 1, wobei das visuelle Element basierend auf den Gesteninformationen des zweiten Teils gesteuert wird, wenn die Gesteninformationen des zweiten Teils einer voreingestellten ersten Geste entsprechen, oder wobei das visuelle Element nicht basierend auf den Gesteninformationen des zweiten Teils gesteuert wird, wenn die Gesteninformationen des zweiten Teils nicht der voreingestellten ersten Geste entsprechen.

6. Steuerungsverfahren nach Anspruch 1, das weiter Folgendes umfasst:
Steuern des visuellen Elements, auf das der Navigationsindikator gerichtet ist, basierend auf den Positionsinformationen des ersten Teils, die basierend auf mindestens zwei Einzelbildern des Zielbilds erhalten werden,
wobei ein Verfahren zum Bestimmen der mindestens zwei Einzelbilder des Zielbilds Folgendes umfasst:
Aufnehmen eines Bilds, das den Gesteninformationen des zweiten Teils entspricht, als das Zielbild, wenn die Gesteninformationen des zweiten Teils einer voreingestellten zweiten Geste entsprechen; und
Auswählen der mindestens zwei Einzelbilder des Zielbilds aus einer Vielzahl aufeinanderfolgender Einzelbilder des Zielbilds.

7. Steuerungsverfahren nach Anspruch 6, wobei das Steuern des visuellen Elements, auf das der Navigationsindikator gerichtet ist, basierend auf den Positionsinformationen des ersten Teils, die basierend auf mindestens zwei Einzelbildern des Zielbilds erhalten wurden, Folgendes umfasst: Bestimmen von Bewegungsinformationen des ersten Teils basierend auf den Positionsinformationen des ersten Teils, die basierend auf den mindestens zwei Einzelbildern des Zielbilds erhalten wurden; und Steuern des visuellen Elements basierend auf den Bewegungsinformationen des ersten Teils, oder wobei die zweite Geste ein Auseinanderspreizen einer voreingestellten Anzahl von Fingern umfasst.

8. Steuerungsverfahren nach Anspruch 7, wobei die Bewegungsinformationen des ersten Teils eines oder mehrere des Folgenden umfassen: Bewegungszeit des ersten Teils, Bewegungsgeschwindigkeit des ersten Teils, eine Verschiebung des ersten Teils und eine Bewegungsbeschleunigung des ersten Teils, oder
wobei das Steuern des visuellen Elements basierend auf den Bewegungsinformationen des ersten Teils Folgendes umfasst: Bestimmen, ob die Bewegungsinformationen des ersten Teils eine voreingestellte Bewegungsbedingung erfüllen; und Bestimmen einer Bildlaufrichtung und einer Bildlaufdistanz des visuellen Elements basierend auf den Bewegungsinformationen des ersten Teils, wenn die Bewegungsinformationen des ersten Teils eine voreingestellte Bewegungsbedingung erfüllen.

9. Steuerungsverfahren nach Anspruch 1, wobei das Bestimmen einer Bewegungstrajektorie eines Navigationsindikators basierend auf den Positionsinformationen des ersten Teils Folgendes umfasst: Bestimmen der Bewegungstrajektorie des Navigationsindikators basierend auf den Positionsinformationen des ersten Teils, wenn die Gesteninformationen des zweiten Teils einer voreingestellten dritten Geste entsprechen, oder
wobei das Bestimmen einer Bewegungstrajektorie eines Navigationsindikators basierend auf den Positionsinformationen des ersten Teils Folgendes umfasst: Bestimmen der Bewegungstrajektorie des Navigationsindikators basierend auf den Positionsinformationen des ersten Teils, die von beabstandeten Bildern erhalten wurden.

10. Steuerungsverfahren nach Anspruch 1, wobei
das Empfangen eines Bilds Folgendes umfasst: Empfangen (S201) eines von einer Kamera (110) aufgenommenen Bilds, und die Kamera eine RGB-Kamera umfasst, und wobei das Steuerungsverfahren weiter Folgendes umfasst: Durchführen (S202) einer Farbraumverarbeitung des Farbtonsättigungswerts "HSV" an dem Bild, um einen Farbraum des Bildes in einen HSV-Farbraum umzuwandeln, oder
das Steuerungsverfahren weiter Folgendes umfasst: Durchführen einer Binärisierungsverarbeitung und einer Weißabgleichverarbeitung an dem Bild, oder
das Bestimmen einer Bewegungstrajektorie eines Navigationsindikators basierend auf den Positionsinformationen des ersten Teils Folgendes umfasst: Bestimmen einer endgültigen Bewegungstrajektorie des Navigationsindikators basierend auf den Positionsinformationen des ersten Teils, indem ein Filteralgorithmus und ein Bildstabilisierungsalgorithmus angewendet werden.

11. Steuerungsverfahren nach Anspruch 1, wobei das Erhalten von Positionsinformationen eines ersten Teils und Gesteninformationen eines zweiten Teils eines Benutzers basierend auf dem Bild, Folgendes umfasst: Erhalten der Positionsinformationen des ersten Teils und der Gesteninformationen des zweiten Teils des Benutzers in dem Bild; oder wobei das Bestimmen einer Bewegungstrajektorie eines Navigationsindikators basierend auf den Positionsinformationen des ersten Teils Folgendes umfasst: Bestimmen einer Bewegungstrajektorie eines Navigationsindikators auf einer gesteuerten Vorrichtung basierend auf Positionsinformationen des ersten Teils relativ zu der gesteuerten Vorrichtung, und wobei der Steuerbefehl zum Steuern eines visuellen Elements auf der gesteuerten Vorrichtung dient, auf das der Navigationsindikator gerichtet ist.

12. Steuerungsvorrichtung (300) zum Steuern eines visuellen Elements (130), wobei die Vorrichtung Folgendes umfasst:
eine Datenempfangseinheit (301), die dazu konfiguriert ist, ein Bild von einer Kamera zu empfangen;
eine Erhalteeinheit (302), die dazu konfiguriert ist, Positionsinformationen eines ersten Teils und Gesteninformationen eines zweiten Teils eines Benutzers basierend auf dem Bild zu erhalten;
eine Bewegungstrajektorieneinheit (303), die dazu konfiguriert ist, eine Bewegungstrajektorie eines Navigationsindikators (120) basierend auf den Positionsinformationen des ersten Teils zu bestimmen; und
eine Steuerbefehlseinheit (304), die dazu konfiguriert ist, basierend auf den Gesteninformationen des zweiten Teils einen Steuerbefehl zum Steuern eines visuellen Elements zu bestimmen, auf das der Navigationsindikator gerichtet ist;
wobei der erste Teil ein Handgelenk eines Arms des Benutzers umfasst und der zweite Teil eine Hand des Arms des Benutzers umfasst, wobei der erste Teil zu einem anderen Körperteil gehört als der zweite Teil;
**dadurch gekennzeichnet, dass** die Vorrichtung weiter eine Bildlaufeinheit umfasst, die dazu konfiguriert ist, eine Positionsänderung des ersten Teils in einen Bildlaufeffekt des visuellen Elements umzusetzen, wenn die Gesteninformationen des zweiten Teils einer vorgegebenen Geste entsprechen.

## Revendications

1. Procédé de commande mis en œuvre par ordinateur (100) pour commander un élément visuel (130), le procédé comprenant :
la réception (S101) d'une image provenant d'une caméra ;
l'obtention (S102) d'informations de position d'une première partie d'un utilisateur et d'informations de geste d'une seconde partie d'un utilisateur sur la base de l'image ;
la détermination (S103) d'une trajectoire de mouvement d'un indicateur de navigation (120) sur la base des informations de position de la première partie ; et
la détermination (S104) d'une instruction de commande pour commander l'élément visuel vers lequel l'indicateur de navigation est dirigé sur la base des informations de geste de la seconde partie ;
dans lequel la première partie comprend un poignet d'un bras de l'utilisateur et la seconde partie comprend une main du bras de l'utilisateur, la première partie appartenant à une partie du corps différente de la seconde partie ;
**caractérisé en ce que** le procédé comprend en outre, lorsque les informations de geste de la seconde partie sont conformes à un geste prédéterminé, la traduction d'un changement de position de la première partie en un effet de défilement de l'élément visuel.

2. Procédé de commande selon la revendication 1, dans lequel un changement de position de la première partie reflète un changement de position de la seconde partie.

3. Procédé de commande selon la revendication 1, dans lequel un geste de la seconde partie est indépendant d'une position et/ou d'un geste de la première partie.

4. Procédé de commande selon la revendication 1, dans lequel l'obtention d'informations de position d'une première partie et d'informations de geste d'une seconde partie d'un utilisateur sur la base de l'image comprend :
l'obtention, par un premier module de calcul, des informations de position de la première partie de l'utilisateur sur la base de l'image ; et
l'obtention, par un second module de calcul, des informations de geste de la seconde partie de l'utilisateur sur la base de l'image, et
dans lequel le premier module de calcul est configuré pour exécuter un premier modèle d'apprentissage automatique, et dans lequel le second module de calcul est configuré pour exécuter un second modèle d'apprentissage automatique.

5. Procédé de commande selon la revendication 1, dans lequel l'élément visuel est commandé sur la base des informations de geste de la seconde partie si les informations de geste de la seconde partie sont conformes à un premier geste prédéfini, ou dans lequel l'élément visuel n'est pas commandé sur la base des informations de geste de la seconde partie si les informations de geste de la seconde partie ne sont pas conformes au premier geste prédéfini.

6. Procédé de commande selon la revendication 1, comprenant en outre :
la commande de l'élément visuel vers lequel l'indicateur de navigation est dirigé sur la base des informations de position de la première partie, obtenues sur la base d'au moins deux trames d'image cible,
dans lequel un procédé de détermination des au moins deux trames d'image cible comprend :
le fait de considérer, si les informations de geste de la seconde partie sont conformes à un deuxième geste prédéfini, une image correspondant aux informations de geste de la seconde partie comme image cible ; et
la sélection des au moins deux trames d'image cible parmi une pluralité de trames consécutives d'image cible.

7. Procédé de commande selon la revendication 6, dans lequel la commande de l'élément visuel vers lequel l'indicateur de navigation est dirigé sur la base des informations de position de la première partie, obtenues sur la base d'au moins deux trames d'image cible comprend : la détermination d'informations de mouvement de la première partie sur la base des informations de position de la première partie, obtenues sur la base des au moins deux trames d'image cible ; et la commande de l'élément visuel sur la base des informations de mouvement de la première partie, ou dans lequel le deuxième geste comprend l'écartement d'un nombre prédéfini de doigts.

8. Procédé de commande selon la revendication 7, dans lequel les informations de mouvement de la première partie comprennent un ou plusieurs des éléments suivants : un temps de mouvement de la première partie, une vitesse de mouvement de la première partie, un déplacement de la première partie et une accélération de mouvement de la première partie, ou
dans lequel la commande de l'élément visuel sur la base des informations de mouvement de la première partie comprend : la détermination pour établir si les informations de mouvement de la première partie satisfont à une condition de mouvement prédéfinie ; et la détermination d'une direction de défilement et d'une distance de défilement de l'élément visuel sur la base des informations de mouvement de la première partie si les informations de mouvement de la première partie satisfont à une condition de mouvement prédéfinie.

9. Procédé de commande selon la revendication 1, dans lequel la détermination d'une trajectoire de mouvement d'un indicateur de navigation sur la base des informations de position de la première partie comprend : la détermination de la trajectoire de mouvement de l'indicateur de navigation sur la base des informations de position de la première partie si les informations de geste de la seconde partie sont conformes à un troisième geste prédéfini, ou
dans lequel la détermination d'une trajectoire de mouvement d'un indicateur de navigation sur la base des informations de position de la première partie comprend : la détermination de la trajectoire de mouvement de l'indicateur de navigation sur la base des informations de position de la première partie, obtenues à partir d'images espacées.

10. Procédé de commande selon la revendication 1, dans lequel
la réception d'une image comprend : la réception (S201) d'une image capturée par une caméra (110), et la caméra comprend une caméra RVB, et dans lequel le procédé de commande comprend en outre : l'exécution (S202) d'un traitement d'espace colorimétrique teinte-saturation-valeur « TSV » sur l'image pour convertir un espace colorimétrique de l'image en un espace colorimétrique TSV, ou
le procédé de commande comprend en outre : l'exécution d'un traitement de binarisation et d'un traitement de balance des blancs sur l'image, ou
la détermination d'une trajectoire de mouvement d'un indicateur de navigation sur la base des informations de position de la première partie comprend : la détermination, sur la base des informations de position de la première partie, d'une trajectoire de mouvement finale de l'indicateur de navigation en adoptant un algorithme de filtrage et un algorithme anti-tremblement.

11. Procédé de commande selon la revendication 1, dans lequel l'obtention d'informations de position d'une première partie et d'informations de geste d'une seconde partie d'un utilisateur sur la base de l'image comprend : l'obtention des informations de position de la première partie et des informations de geste de la seconde partie de l'utilisateur dans l'image ; ou dans lequel la détermination d'une trajectoire de mouvement d'un indicateur de navigation sur la base des informations de position de la première partie comprend : la détermination d'une trajectoire de mouvement d'un indicateur de navigation sur un dispositif commandé sur la base d'informations de position de la première partie par rapport au dispositif commandé, et dans lequel l'instruction de commande est destinée à commander un élément visuel vers lequel l'indicateur de navigation est dirigé sur le dispositif commandé.

12. Dispositif de commande (300) pour commander un élément visuel (130), le dispositif comprenant :
une unité de réception de données (301), configurée pour recevoir une image provenant d'une caméra ;
une unité d'obtention (302), configurée pour obtenir des informations de position d'une première partie et des informations de geste d'une seconde partie d'un utilisateur sur la base de l'image ;
une unité de trajectoire de mouvement (303), configurée pour déterminer une trajectoire de mouvement d'un indicateur de navigation (120) sur la base des informations de position de la première partie ; et
une unité d'instruction de commande (304), configurée pour déterminer une instruction de commande pour commander un élément visuel vers lequel l'indicateur de navigation est dirigé sur la base des informations de geste de la seconde partie ;
dans lequel la première partie comprend un poignet d'un bras de l'utilisateur et la seconde partie comprend une main du bras de l'utilisateur, la première partie appartenant à une partie du corps différente de la seconde partie ;
**caractérisé en ce que** le dispositif comprend en outre une unité de défilement configurée pour traduire un changement de position de la première partie en un effet de défilement de l'élément visuel lorsque les informations de geste de la seconde partie sont conformes à un geste prédéterminé.
